# EUROPÄISCHE PATENTSCHRIFT

(11) **EP 4 732 417 B1**
(45) Veröffentlichungstag und Bekanntmachung des Hinweises auf die Patenterteilung: **02.12.2026**
(21) Anmeldenummer: 25704547.6
(22) Anmeldetag: 07.02.2025
(51) Int. Cl.: H02M 1/00, H02M 5/12, H02M 7/10, B23K 9/06, H02M 7/19, H02M 7/25

(54) **NETZTEIL MIT HILFSWICKLUNG UND MAGNETISCHEM TEILER ZUM LICHTBOGENFÜGEN**
POWER SUPPLY WITH AUXILIARY WINDING AND MAGENTIC DIVIDER FOR ARC JOINING
ALIMENTATION ÉLECTRIQUE AVEC ENROULEMENT AUXILIAIRE ET DIVISEUR MAGNÉTIQUE POUR L'ASSEMBLAGE À L'ARC

(30) Priorität: 09.02.2024 EP 24156861
(43) Veröffentlichungstag der Anmeldung: 29.04.2026
(73) Patentinhaber: FRONIUS INTERNATIONAL GmbH, 4643 Pettenbach (AT)
(72) Erfinder: ZWIRCHMAIR, Claus, 4643 Pettenbach (AT); MÜHLBERGER, Michael, 4643 Pettenbach (AT); SCHULTSCHIK, Christoph, 4643 Pettenbach (AT)
(74) Vertreter: Weiss Patentanwalts GmbH
(86) Internationale Anmeldenummer: PCT/EP2025/053169
(87) Internationale Veröffentlichungsnummer: WO 2025/168739

(56) Entgegenhaltungen:
- AT-B- 403 260
- DE-A1- 2 723 767
- SU-A1- 1 480 991
- YA NOVIKOV O ET AL: "A NON-LINEAR POWER SOURCE FOR WELDING ARCS", AUTOMATIC WELDING,, vol. 24, no. 11, 1 November 1971 (1971-11-01), pages 46 - 49, XP001341641

## Beschreibung

Die Erfindung betrifft ein Netzteil nach Anspruch 1.

Aus dem Stand der Technik bekannte Netzteile zur Bereitstellung einer Fügespannung zur Durchführung eines Lichtbogenfügeverfahrens, wie insbesondere einem Lichtbogenschweißverfahren oder einem Lichtbogenlötverfahren, weisen einen eingangsseitigen Gleichrichter auf, der eine Eingangswechselspannung zu einer Zwischenkreisspannung gleichrichtet. Diese wird mittels eines Wechselrichters in eine hochfrequente Primär-Wechselspannung einer definierten Schaltfrequenz umgewandelt und über einen Transformator in eine an dessen Sekundärseite abfallende Sekundär-Wechselspannung übertragen. Die Sekundär-Wechselspannung wird durch geeignete Schaltmittel in die vorstehend genannte Fügespannung gewandelt, also in eine Schweißspannung oder Lötspannung, dabei vorzugsweise mit einem weiteren, sekundärseitigen Gleichrichter gleichgerichtet und am Ausgang als Fügestrom ausgegeben. Durch das Windungsverhältnis Primärwicklung zu Sekundärwicklung des Transformators wird die Stromstärke auf der Sekundärseite des Transformators auf die zum Fügen notwendig hohen Ströme angehoben, die beim Schweißen im Bereich mehrerer 100A liegen können. Steht bereits eine geeignete Primär-Wechselspannung zur Verfügung, kann ein Netzteil auch nur einen Transformator und die auf der Sekundärseite erforderlichen Schaltmittel zum Richten der Sekundär-Wechselspannung aufweisen, und es kann auf den primärseitigen Gleichrichter, Zwischenkreis und Wechselrichter verzichtet werden.

Übliche Schweißspannungen, als wichtiges Beispiel von allgemeinen Fügespannungen, liegen in einem Bereich zwischen 20V und 60V, was ausreichend ist, einen einmal gezündeten Lichtbogen aufrecht zu erhalten. Zum Zünden des Lichtbogens bzw. für einen stabilen Lichtbogen bei Stromstärken kleiner 20A wird aber eine höhere Spannung benötigt. Auch bei dynamischen Anforderungen des Schweißprozesses, beispielsweise durch eine veränderte Lichtbogenlänge hervorgerufen, kann eine höhere Schweißspannung einen stabileren Lichtbogen gewährleisten.

Der Stand der Technik zeigt einige Möglichkeiten zur Erreichung dieser höheren Schweißspannung auf der Sekundärseite. Beispielsweise kann dies mit bekannten Spannungsverdopplungsschaltungen oder Schaltnetzteilen erreicht werden, was aber mit zusätzlichem Bauteilaufwand verbunden ist. So ist aus der US 2004/119572 A1 bekannt, mit einer als Tertiärwicklung bezeichneten zweiten Sekundärwicklung am Transformator eine höhere Ausgangsspannung bei kleineren Strömen zu erzielen. Dabei weist die zweite Sekundärwicklung ein zur ersten Sekundärwicklung unterschiedliches Übersetzungsverhältnis sowie eine höhere Streuinduktivität auf, sodass die Spannung am Ausgang der zweiten Sekundärwicklung bei höheren Strömen einbricht. Die höhere Streuinduktivität der zweiten Sekundärwicklung ist allerdings mit hohem konstruktivem Aufwand verbunden. Außerdem ist der mit der zweiten Sekundärwicklung erzielbare Spannungsbereich, der sich aufgrund der ganzzahligen Windungszahlen erreichen lässt, sehr eingeschränkt. Die erste Sekundärwicklung hat zur Erreichung des großen Stromübersetzungsverhältnisses typischerweise eine sehr kleine Windungszahl und einen hohen Querschnitt, um die Stromdichte und somit die Wärmeentwicklung gering zu halten. Daher ist es aus konstruktiven Gründen oftmals nötig, auf eine Windungszahl der ersten Sekundärwicklung von lediglich eins zurückzugreifen. In einem solchen Fall (die Tertiärwicklung von US 2004/119572 A1 hat eine höhere Windungszahl als die erste Sekundärwicklung!) muss die zweite Sekundärwicklung bzw. Tertiärwicklung, zumindest zwei Windungen aufweisen, und hat damit die doppelte Ausgangsspannung wie die erste Sekundärwicklung. Bei einer Verdopplung der Ausgangsspannung ergibt sich jedoch die Gefahr, aufgrund von Sicherheitsvorschriften vorgegebene Höchstwerte der Ausgangsspannung zu überschreiten. Aktuell beträgt die dauerhaft zugelassene maximale Spannung am Ausgang eines Netzteils 113V DC.

Aus EP 3 376 659 A1 ist ein weiterer Ansatz zur Erhöhung einer Leerlaufspannung zum Zünden eines Lichtbogens bekannt. In dieser Schrift besteht jedoch nur geringe Flexibilität bezüglich der einstellbaren Spannungserhöhungen. Insbesondere sieht EP 3 376 659 A1 eine zweite Sekundärwicklung vor, die eine zusätzliche, wesentlich höhere Spannung bereitstellt als die von einer ersten, bereits bestehenden Sekundärwicklung bereitgestellte Spannung. Es ist folglich nicht möglich, geringe Spannungserhöhungen ohne große elektrische Verluste zu realisieren, beispielsweise Leerlaufspannungserhöhungen um den Faktor 1,6, wie dies für eine Erhöhung von zum Teil üblichen 70V DC auf zum Zünden gewünschte (gerade noch zulässige) 112V DC aber erforderlich wäre.

Der Fachartikel "A non-linear power source for welding arcs", Novikov et al., 1971, offenbart ferner eine nichtlineare Energiequelle für Schweißanwendungen, die in Abhängigkeit der Sättigung eines Transformators verschiedene Spannungsniveaus zum Schweißen zur Verfügung stellt.

Die Schriften SU 1 480 991 A1, DE 27 23 767 A1 und AT 403 260 B zeigen demgegenüber unterschiedliche Beschaltungen von Transformatoren, um zum Schweißen geeignete Ströme und Spannungen zur Verfügung zu stellen. Auch für das Löten, als nicht minder wichtiges Fügeverfahren, gilt, dass zum Zünden von Lichtbögen temporär erhöhte Fügespannungen wünschenswert sind, wobei in gleicher Weise regulatorische Einschränkungen eingehalten werden müssen.

Der Erfindung liegt somit die Aufgabe zugrunde, ein Netzteil bereitzustellen, das eine präzisere Erhöhung der Fügespannung erlaubt, um ein sicheres Zünden des Lichtbogens mit gesetzlich erlaubten Spannungen zu gewährleisten, wobei Verluste und Aufwand für zusätzliche Bauteile geringgehalten werden sollen.

Diese Aufgabe wird durch die Merkmale des unabhängigen Anspruchs 1 gelöst. Im erfindungsgemäßen Netzteil des unabhängigen Anspruchs 1 sind der erste Haupt-Wicklungsanschluss über ein erstes elektrisches Schaltmittel mit dem ersten Netzteil-Ausgangspol elektrisch verbunden, um einen ersten Fügespannungspfad zwischen dem ersten Haupt-Wicklungsanschluss und dem ersten Netzteil-Ausgangspol zu erzeugen, der zweite Haupt-Wicklungsanschluss mit dem zweiten Netzteil-Ausgangspol elektrisch verbunden, der erste Hilfs-Wicklungsanschluss über ein zweites elektrisches Schaltmittel mit dem ersten Netzteil-Ausgangspol verbunden, und der zweite Hilfs-Wicklungsanschluss elektrisch leitend mit dem ersten Haupt-Wicklungsanschluss verbunden, um einen zweiten, zum ersten Fügespannungspfad parallelen Fügespannungspfad zwischen dem ersten Haupt-Wicklungsanschluss und dem ersten Netzteil-Ausgangspol zu erzeugen. Das erste Schaltmittel und das zweite Schaltmittel sind hierbei ausgestaltet, in Abhängigkeit eines Betriebszustandes des Netzteils den ersten Fügespannungspfad oder den zweiten Fügespannungspfad oder gleichzeitig den ersten Fügespannungspfad und den zweiten Fügespannungspfad in einen elektrisch leitenden Zustand zu versetzen und damit zu aktivieren, um die von der Primärwicklung aufgenommene Primär-Wechselspannung in die Fügespannung zu wandeln.

Erfindungsgemäß ist ferner vorgesehen, dass die Haupt-Sekundärwicklung als Wicklung mit Mittelpunktanzapfung oder als Serienschaltung von zwei Wicklungen ausgeführt ist, neben dem ersten Haupt-Wicklungsanschluss und dem zweiten Haupt-Wicklungsanschluss aufweisend einen dritten Haupt-Wicklungsanschluss, wobei der zweite Haupt-Wicklungsanschluss der Mittelpunktanzapfung entspricht und wobei eine zweite, um einen zweiten der zumindest zwei Nebenschenkel gewickelte Hilfs-Sekundärwicklung mit einem dritten Hilfs-Wicklungsanschluss und einem vierten Hilfs-Wicklungsanschluss vorgesehen ist, wobei der dritte Haupt-Wicklungsanschluss über ein drittes elektrisches Schaltmittel mit dem ersten Netzteil-Ausgangspol verbunden ist, um einen dritten Fügespannungspfad zwischen dem dritten Haupt-Wicklungsanschluss und dem ersten Netzteil-Ausgangspol zu erzeugen, wobei der dritte Hilfs-Wicklungsanschluss elektrisch leitend mit dem dritten Haupt-Wicklungsanschluss verbunden ist und der vierte Hilfs-Wicklungsanschluss über ein viertes elektrisches Schaltmittel mit dem ersten Netzteil-Ausgangspol verbunden ist, um einen vierten, zum dritten Fügespannungspfad parallelen Fügespannungspfad zwischen dem dritten Haupt-Wicklungsanschluss und dem ersten Netzteil-Ausgangspol zu erzeugen, und wobei das dritte Schaltmittel und das vierte Schaltmittel ausgestaltet sind, in Abhängigkeit des Betriebszustandes des Netzteils entweder den dritten und/oder den vierten Fügespannungspfad in einen elektrisch leitenden Zustand zu versetzen und damit zu aktivieren.

Durch die erfindungsgemäße Anordnung der Komponenten Transformator, Schaltmittel und Wicklungen des Transformators und die gezielte Aktivierung / Begrenzung der Fügespannungspfade in Abhängigkeit eines Betriebszustandes des Netzteils (z.B. ein fließender Strom, eine Temperatur, eine übertragene Leistung usw.) wird eine Reihe vorteilhafter technischer Effekte kombiniert, sodass eine gewünschte Spannungserhöhung erreicht wird, mit der eine Mindestspannung für das Zünden erreicht wird, im niedrigen Leistungsbereich ein stabiler Lichtbogen gewährleistet ist und eine definierte maximale Spannung unterschritten bleibt. Konkret erlaubt die elektrische Verbindung des zweiten Hilfs-Wicklungsanschluss mit dem ersten Haupt-Wicklungsanschluss eine serielle Verschaltung der Haupt-Sekundärwicklung mit der zumindest eine Hilfs-Sekundärwicklung, sodass sich die in diesen Wicklungen induzierten elektrischen Spannungen addieren, was eine Spannungserhöhung erlaubt. Aufgrund der Tatsache, dass die Schaltmittelt aber ausgestaltet sind, je nach Betriebszustand des Netzteils den ersten und/oder den zweiten Fügespannungspfad in einen elektrisch leitenden Zustand zu versetzen, und damit den ersten Haupt-Wicklungsanschluss und/oder den zweiten Hilfs-Wicklungsanschluss elektrisch leitend oder mit dem ersten Netzteil-Ausgangspol zu verbinden, kann je nach Betriebszustand des Netzteils entweder die Summe der an der Haupt-Sekundärwicklung und der zumindest einen Hilfs-Sekundärwicklung abfallenden Spannungen an den Netzteil-Ausgangspol C ausgegeben werden, oder es kann nur die an der Haupt-Sekundärwicklung abfallende Spannung ausgegeben werden, oder es kann eine Spannung zwischen diesen Werten ausgegeben werden. Auf diese Weise kann gezielt ausgewählt werden, wann es zu einer Spannungserhöhung kommen soll, z.B. im Leerlauf, und wann nicht, z.B. während des Schweißens.

Vorteilhafte Ausgestaltungen des erfindungsgemäßen Netzteils sind Gegenstand der abhängigen Ansprüche.

Die gegenständliche Erfindung wird nachfolgend unter Bezugnahme auf die Figuren 1 bis 5 näher erläutert, die beispielhaft, schematisch und nicht einschränkend vorteilhafte Ausgestaltungen der Erfindung zeigen. Dabei zeigt
Fig.1 ein Blockschaltbild eines primär getakteten Netzteils,
Fig.2 ein Netzteil mit einer Haupt-Sekundärwicklung und einer Hilfs-Sekundärwicklung,
Fig.3 ein erfindungsgemäßes Netzteil mit einer Haupt-Sekundärwicklung mit Mittelpunktanzapfung und zwei Hilfs-Sekundärwicklungen,
Fig.4 Ausgestaltungen der Schaltmittel in den erfindungsgemäßen Fügespannungspfaden,
Fig.5 eine mit einem erfindungsgemäßen Netzteil erreichbare Strom-Spannungs-Kennlinie.

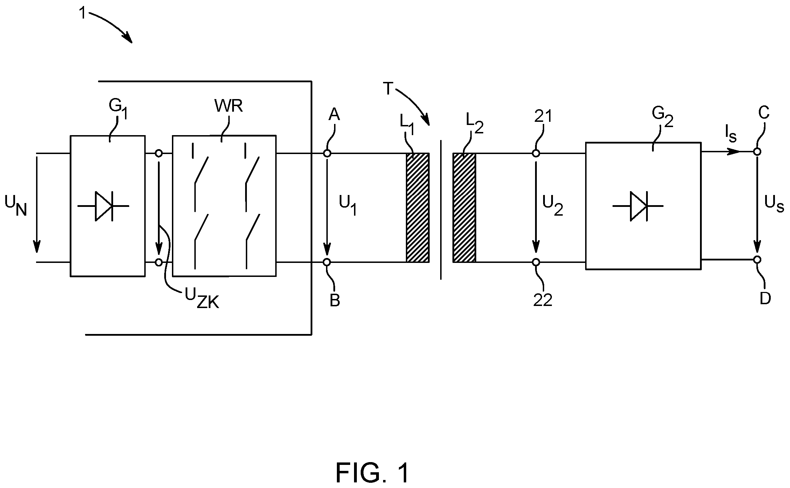

Fig. 1 zeigt ein aus dem Stand der Technik bekanntes Blockschaltbild eines primär getakteten Netzteils 1 zur Bereitstellung eines Fügestroms I_{S} und einer Fügespannung Uₛ für die Durchführung eines Lichtbogenfügeverfahrens, beispielsweise eines WIG-Schweißverfahrens, Stabelektrodenschweißverfahrens oder MIG/MAG Schweißverfahrens oder MIG/MAG-Lötverfahren. Im gezeigten Fall wird eine (Netz-)Eingangsspannung U_{N} mittels eines eingangsseitigen Gleichrichters G₁ zu einer Zwischenkreisspannung U_{ZK} gleichgerichtet. Dabei kann auch ein nicht näher beschriebenes Leistungsfaktorkorrekturfilter (PFC Power Factor Correction), oder auch ein sogenannter Booster zur Erhöhung, Glättung und/oder Stabilisierung der Zwischenkreisspannung U_{ZK} eingesetzt werden. Ein nachgeschalteter Wechselrichter WR, der beispielsweise als Vollbrücke ausgeführt ist, erzeugt eine Primär-Wechselspannung U₁ mit einer Schaltfrequenz f_{S}, die an die Primärwicklung L₁ eines Transformators T angelegt wird.

Die Primär-Wechselspannung U₁ ist näherungsweise eine Rechteckspannung und wird durch den Transformator T abwärts auf die Sekundär-Wechselspannung U₂ transformiert, um gleichzeitig eine hohe Stromübersetzung und damit letztlich einen hohen Fügestrom I_{S} erzielen zu können. Dementsprechend hat die Sekundärwicklung L₂ des Transformators T eine hohe Strombelastbarkeit, um Fügeströme I_{S}, insbesondere Schweißströme I_{S}, im Bereich einiger 100A, beispielsweise bis zu 600A bereitstellen zu können. Der Strom an der Sekundärwicklung L₂ des Transformators T wird, wie im Stand der Technik üblich, über einen ausgangsseitigen Gleichrichter G₂ gleichgerichtet und zwischen einem ersten Netzteil-Ausgangspol C und einem zweiten Netzteil-Ausgangspol D bereitgestellt. Vielfach werden im Stand der Technik am Ausgang eines Netzteils 1, d.h. am ersten Netzteil-Ausgangspol C und einem zweiten Netzteil-Ausgangspol D, zusätzlich Kapazitäten und/oder Glättungswiderstände angeordnet, um Störungen zu dämpfen.

Wie vorstehend erläutert, kann auf den primärseitigen Gleichrichter G1, den Zwischenkreis U_{ZK} und den Wechselrichter WR auch verzichtet werden, wenn bereits eine geeignete Primär-Wechselspannung U₁ zur Verfügung steht, beispielsweise weil sich eine von einem elektrischen Netz zur Verfügung gestellte Spannung bereits als Primär-Wechselspannung U₁ eignet oder weil eine geeignete Primär-Wechselspannung U₁ von einem anderen Gerät zur Verfügung gestellt wird und so direkt übernommen und verwendet werden kann. Diese Komponenten sind für die nachfolgend erläuterte Erfindung folglich nicht zwingend erforderlich.

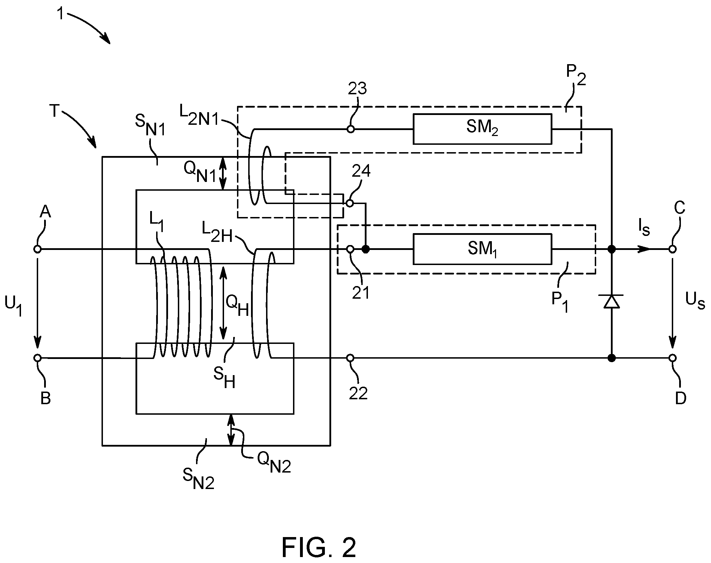

Wie eingangs ausgeführt, stellt die gezielte Erhöhung einer Fügespannung U_{S} zu gezielten Zeitpunkten, insbesondere im Leerlauf zum Zünden bzw. im niedrigen Leistungsbereich, ein oftmaliges Problem dar, vor allem beim Lichtbogenschweißen, in gleicher Weise aber beim Lichtbogenlöten. Wie dieses Problem und folglich die vorstehend genannte Aufgabe, eine präzise Erhöhung der Fügespannung zu ermöglichen, wobei Verluste und Bauteilaufwand geringzuhalten sind, gelöst werden kann, ist nachstehend anhand von Fig.2 gezeigt.

Fig.2 zeigt ein Netzteil 1 zur Bereitstellung einer zwischen einem ersten Netzteil-Ausgangspol C und einem zweiten Netzteil-Ausgangspol D abfallenden Fügespannung Uₛ für die Durchführung eines Lichtbogenfügeverfahrens, bei dem es sich, wie vorstehend erläutert, bevorzugt um ein Lichtbogenschweißverfahren oder um ein Lichtbogenlötverfahren handelt. Im gezeigten Netzteil 1 ist ein Transformator T mit einem magnetischen Kern vorgesehen, welcher zumindest 3 Schenkel aufweist, einen Hauptschenkel S_{H}, und zumindest zwei Nebenschenkel S_{N1}, S_{N2}, sowie eine Primärwicklung L1 zur Aufnahme der am Netzteil-Eingangspolpaar A, B anliegenden Primär-Wechselspannung U₁, eine Haupt-Sekundärwicklung L_{2H} mit einem ersten Haupt-Wicklungsanschluss 21 und einem zweiten Haupt-Wicklungsanschluss 22, und eine Hilfs-Sekundärwicklung L_{2N1} mit einem ersten Hilfs-Wicklungsanschluss 23 und einem zweiten Hilfs-Wicklungsanschluss 24. Die Primärwicklung L₁ und die Haupt-Sekundärwicklung L_{2H} sind um den Hauptschenkel S_{H} gewickelt und die zumindest eine Hilfs-Sekundärwicklung L_{2N1} ist um den ersten der zumindest zwei Nebenschenkel S_{N1} gewickelt.

Im Rahmen der Erfindung ist weiters vorgesehen, dass der erste Haupt-Wicklungsanschluss 21 über ein erstes elektrisches Schaltmittel SM₁ mit dem ersten Netzteil-Ausgangspol C elektrisch verbunden ist, um einen ersten Fügespannungspfad P₁ zwischen dem ersten Haupt-Wicklungsanschluss 21 und dem ersten Netzteil-Ausgangspol C zu erzeugen. Der zweite Haupt-Wicklungsanschluss 22 ist mit dem zweiten Netzteil-Ausgangspol D elektrisch verbunden, der erste Hilfs-Wicklungsanschluss 23 ist über ein zweites elektrisches Schaltmittel SM₂ mit dem ersten Netzteil-Ausgangspol C verbunden, und der zweite Hilfs-Wicklungsanschluss 24 ist elektrisch leitend mit dem ersten Haupt-Wicklungsanschluss 21 verbunden, um einen zweiten, zum ersten Fügespannungspfad P₁ parallelen Fügespannungspfad P₂ zwischen dem ersten Haupt-Wicklungsanschluss 21 und dem ersten Netzteil-Ausgangspol C zu erzeugen.

Das erste Schaltmittel SM₁ und das zweite Schaltmittel SM₂ sind ausgestaltet, in Abhängigkeit eines Betriebszustandes des Netzteils 1 den ersten und/oder den zweiten Fügespannungspfad P₂ in einen elektrisch leitenden Zustand zu versetzen und damit zu aktivieren, um die von der Primärwicklung L₁ aufgenommene Primär-Wechselspannung U₁ in die Fügespannung Uₛ zu wandeln. Das bedeutet, dass im Rahmen der Erfindung in Abhängigkeit des Betriebszustandes des Netzteils 1 entweder alleine der erste Fügespannungspfad P₁ leitet, oder alleine der zweite Fügespannungspfad P₂ leitet, oder sowohl der erste Fügespannungspfad P₁ als auch der zweite Fügespannungspfad P₂ leiten, um die erzeugte Fügespannung Uₛ geeignet zu beeinflussen, z.B. im Leerlauf zum Zünden zu erhöhen. Im Rahmen dessen kann überdies vorgesehen sein, die elektrische Leitfähigkeit eines der Fügespannungspfade P₁, P₂ in Abhängigkeit des Betriebszustandes des Netzteils 1 zu modifizieren, also z.B. zu erhöhen oder zu reduzieren. Dadurch wird es möglich, insbesondere den in einem Fügespannungspfad P₁, P₂ fließenden Strom zu begrenzen, und so unterschiedliche Wirkungen auf die erzeugte Fügespannung Uₛ zu erzielen. Wie zur Realisierung dieser selektiven Aktivierung der genannten Fügespannungspfade P₁, P₂ vorgegangen werden kann, wird nachstehend im Detail erläutert.

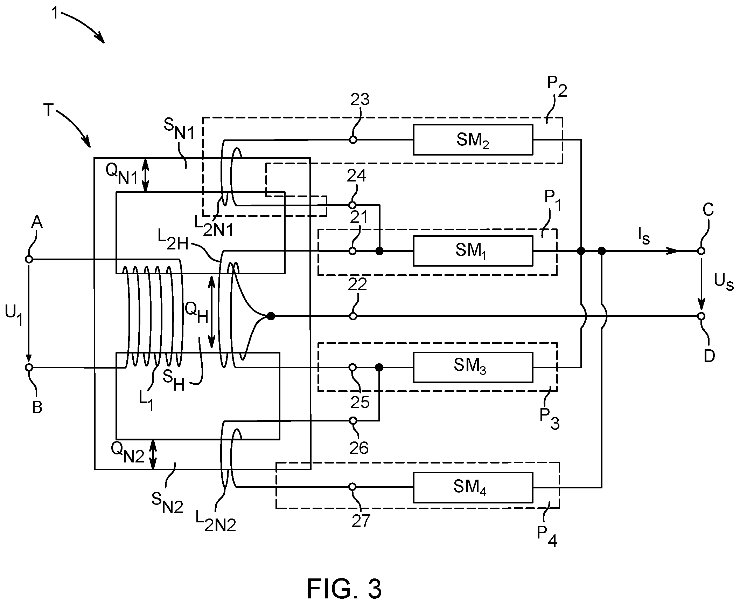

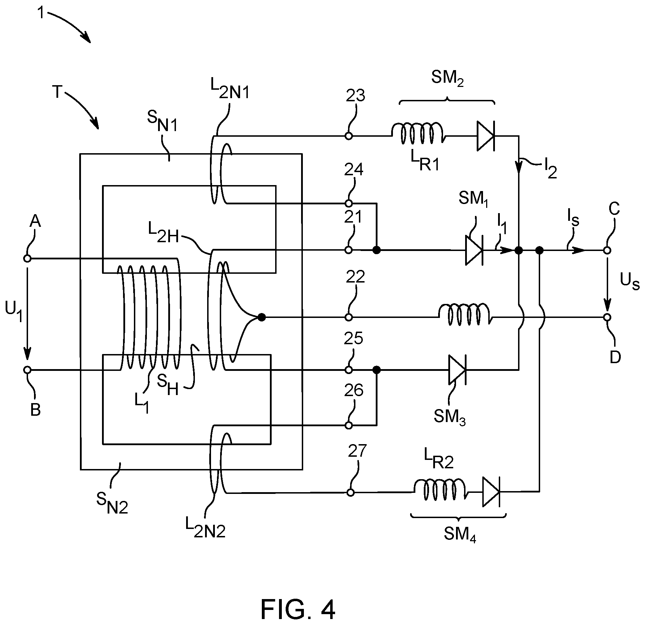

Durch die in Fig.2 gezeigte Anordnung der Komponenten Transformator T, Schaltmittel SM₁, SM₂ und Wicklungen L₁, L_{2H}, L_{2N1} und die Aktivierung / Begrenzung der Fügespannungspfade P₁, P₂ wird eine Reihe technischer Effekten vorteilhaft kombiniert, um die gewünschte Spannungserhöhung zu erreichen. Konkret erlaubt die elektrische Verbindung des zweiten Hilfs-Wicklungsanschluss 24 mit dem ersten Haupt-Wicklungsanschluss 21 eine serielle Verschaltung der Haupt-Sekundärwicklung L_{2H} mit der zumindest eine Hilfs-Sekundärwicklung L_{2N1}, sodass sich die in diesen Wicklungen induzierten elektrischen Spannungen addieren, was eine Spannungserhöhung erlaubt. Aufgrund der Tatsache, dass die Schaltmittelt SM₁, SM₂ aber ausgestaltet sind, je nach Betriebszustand des Netzteils 1 den ersten und/oder den zweiten Fügespannungspfad P₁, P₂ in einen elektrisch leitenden Zustand zu versetzen, und damit den ersten Haupt-Wicklungsanschluss 21 und/oder den zweiten Hilfs-Wicklungsanschluss 23 elektrisch leitend oder mit dem ersten Netzteil-Ausgangspol C zu verbinden, kann je nach Betriebszustand des Netzteils 1 entweder die Summe der an der Haupt-Sekundärwicklung L_{2H} und der zumindest einen Hilfs-Sekundärwicklung L_{2N1} abfallenden Spannungen an den Netzteil-Ausgangspol C ausgegeben werden, oder es kann nur die an der Haupt-Sekundärwicklung L_{2H} abfallende Spannung ausgegeben werden, oder es kann eine Spannung zwischen diesen Werten ausgegeben werden. Auf diese Weise kann gezielt ausgewählt werden, wann es zu einer Spannungserhöhung kommen soll, z.B. im Leerlauf, und wann nicht, z.B. während des Schweißens. Wie die Schaltmittelt SM₁, SM₂ ausgestaltet sein können, um eine derartige betriebszustandsselektive Ausgabe der an den Wicklungen L_{2H} und L_{2N1} abfallenden Spannungen zu ermöglichen, wird an späterer Stelle anhand von Fig.4 erläutert. Die Erfindung bietet in diesem Zusammenhang große Flexibilität, sodass insbesondere auch Spannungen zwischen den an den Wicklungen abfallenden Teilspannungen und der Summenspannungen ausgegeben werden können. Die zwischen dem ersten Netzteil-Ausgangspol C und dem zweiten Netzteil-Ausgangspol D angeordnete Diode ist im Rahmen der in Fig.2 gezeigten Ausführung mit lediglich einer Hilfs-Sekundärwicklung L_{2N1} vorteilhaft, aber keinesfalls zwingend für die Erfindung, wie beispielsweise anhand der nachfolgenden Figuren 3 und 4 erläutert wird.

Der genannte Betriebszustand kann sich auf unterschiedliche Weise in unterschiedlichen Parametern und/oder Messgrößen äußern, sodass verschiedene Parameter und/oder Messgrößen als einen Betriebszustand des Schaltnetzteils 1 repräsentierende Größen herangezogen werden können. Beispielsweise kann vorgesehen sein, den ersten Fügespannungspfad P1 zu aktivieren und den zweiten Fügespannungspfad P2 zu deaktivieren oder zu begrenzen, wenn ein über den ersten Netzteil-Ausgangspol C fließender Ausgangstrom I_{S} einen vorgegebenen Schwellwert Ix überschreitet, oder beide Fügespannungspfade P1 und P2 zu aktivieren, wenn der über den ersten Netzteil-Ausgangspol C fließende Ausgangstrom I den vorgegebenen Schwellwert Ix unterschreitet.

Ein wichtiger Aspekt der gegenständlichen Erfindung ist die Verwendung eines Transformators T mit einem magnetischen Kern mit mehr als zwei Schenkeln. Bevorzugt wird wie gezeigt ein dreischenkeliger magnetischer Kern für den Transformator T eingesetzt, grundsätzlich ist aber auch ein Kern mit mehr als drei Schenkeln denkbar, d.h. ein vier- oder fünf- oder sechsschenkeliger Kern usw. Durch die Verwendung von mehr als zwei Schenkeln wird erreicht, dass nicht sämtliche Wicklungen, d.h. im gegenständlichen Fall die Primärwicklung L₁, die Haupt-Sekundärwicklung L_{2H} und die zumindest eine Hilfs-Sekundärwicklung L_{2N1}, vom gleichen magnetischen Fluss durchsetzt sind. Wie aus der Elektrotechnik hinlänglich bekannt ist, ergibt sich eine in einer Wicklung induzierte elektrische Spannung durch die zeitliche Ableitung des die Wicklung durchsetzenden magnetischen Flusses mal der Windungszahl N der Wicklung, d.h. ${u}_{ind} = - N \frac{d}{dt} Φ .$

Durch die Verwendung mehrerer Schenkel kann gezielt festgelegt werden, wie groß der die zumindest eine Hilfs-Sekundärwicklung L_{2N1} durchsetzende Fluss und damit die induzierte Spannung ist, die letztlich zur Spannungserhöhung am Ausgang des Schaltnetzteils 1 herangezogen werden kann. Auf diese Weise entsteht eine Eingriffsmöglichkeit zur Festlegung der Spannungserhöhung, die im Betrieb, wie beschrieben, betriebszustandsabhängig ausgegeben werden kann oder nicht. Aus dem Stand der Technik ist bislang lediglich bekannt, die Windungszahlen zusätzlicher Wicklungen zu variieren, was insbesondere in Situationen mit Windungszahlen auf der Sekundärseite gleich 1 problematisch sein kann. Wird konkret eine Haupt-Sekundärwicklung L_{2H} mit einer Windungszahl von 1 verwendet, was in der Schweißtechnik aus konstruktiven Gründen vielfach üblich ist, führt die Hinzugabe einer weiteren sekundärseitigen Wicklung, die mit der Haupt-Sekundärwicklung L_{2H} seriell verschaltet ist, bei einem lediglich zweischenkelig ausgeführten Transformator zwingend zu einer Spannungserhöhung um den Faktor 2 oder mehr. Eine Spannungserhöhung um Faktoren zwischen 1 und 2 ist so nicht möglich.

Konkret kann im Rahmen der Erfindung weiters vorgesehen sein, dass jeder Nebenschenkel S_{Nx} des Transformators T einen Querschnitt Q_{Nx} aufweist und jener Nebenschenkel S_{N1}, um den die Hilfs-Sekundärwicklung L_{2N1} gewickelt ist, einen Nebenschenkel-Querschnitt Q_{N1} aufweist, sodass der Querschnitt des Nebenschenkels Q_{N1} einem Anteil der Summe der Nebenschenkel-Querschnitte ΣQ_{Nx} enspricht. Daraus ergibt sich ein Spannungs-Erhöhungsfaktor k = 1 + (Q_{N1}/ ΣQ_{Nx}). Der vorgegebene Spannungs-Erhöhungsfaktor k kann in einer besonders vorteilhaften Weise einem Faktor größer als 1 aber kleiner als 2, oder einem Faktor größer als 1 aber kleiner als 1,75, oder einem Faktor größer als 1 aber kleiner als 1,6, sowie besonders bevorzugt einem Faktor von 1,5 entsprechen. Der Spannungs-Erhöhungsfaktor k entspricht jenem Faktor, um den die Fügespannung bei Verwendung einer Hilfs-Sekundärwicklung L_{2N1} im Leerlauf vergrößert wird, wenn die Windungszahlen der sekundärseitigen Wicklungen gleich 1 sind. Das bedeutet, die Summe der an der Haupt-Sekundärwicklung L_{2H} abfallenden Spannung und der an der zumindest einen Hilfs-Sekundärwicklung L_{2N1} abfallenden Spannung ist um den Faktor k größer als die an der Haupt-Sekundärwicklung L_{2H} abfallenden Spannung alleine.

Bei einer Wahl des Faktors k von 1,5 kann, bei Windungszahlen von 1 auf der Sekundärseite, insbesondere die eingangs beschriebene Spannungserhöhung von zum Schweißen üblichen 60V DC auf eine zum Zünden gewünschte Leerlaufspannung umgesetzt werden und trotzdem garantiert werden, dass die maximal zulässigen 113V nicht überschritten werden.

Obwohl es sich bei der Verwendung lediglich einer sekundärseitigen Hilfs-Sekundärwicklung L_{2N1} sowie eines Nebenschenkels SN₂, um den keine Wicklung gewickelt ist, um eine bevorzugte Ausgestaltung der gegenständlichen Erfindung handelt, ist es im Rahmen der Erfindung ebenso denkbar, dass auch zwei oder mehr Hilfs-Sekundärwicklungen L_{2N1}, L_{2N2} eingesetzt werden, und dass sämtliche Nebenschenkel eine Wicklung aufweisen. Eine derartige Ausführungsform wird nachfolgend anhand von Fig.3 diskutiert.

Fig.3 zeigt ein Netzteil 1 im Sinne der Erfindung, bei dem im Unterschied zur Ausführung gemäß Fig.2 die Haupt-Sekundärwicklung L_{2H} als Haupt-Sekundärwicklung L_{2H} mit Mittelpunktanzapfung ausgeführt ist. Das in Fig.3 gezeigte Netzteil 1 weist neben dem ersten Haupt-Wicklungsanschluss 21 und dem zweiten Haupt-Wicklungsanschluss 22 einen dritten Haupt-Wicklungsanschluss 25 auf, wobei der zweite Haupt-Wicklungsanschluss 22 der Mittelpunktanzapfung entspricht. Erfindungsgemäß ist eine zweite, um einen zweiten der zumindest zwei Nebenschenkel S_{N2} gewickelte Hilfs-Sekundärwicklung L_{2N2} mit einem dritten Hilfs-Wicklungsanschluss 26 und einem vierten Hilfs-Wicklungsanschluss 27 vorgesehen.

Um das erfindungsgemäße Konzept einer betriebszustandsabhängigen Ausgabe verschiedener sekundärseitiger Spannungen an einem mehrschenkeligen Transformatorkern in der Ausführung gemäß Fig.3 umzusetzen, ist der dritte Haupt-Wicklungsanschluss 25 über ein drittes elektrisches Schaltmittel SM₃ mit dem ersten Netzteil-Ausgangspol C verbunden, um einen dritten Fügespannungspfad P₃ zwischen dem dritten Haupt-Wicklungsanschluss 25 und dem ersten Netzteil-Ausgangspol C zu erzeugen. Der dritte Hilfs-Wicklungsanschluss 26 ist weiters elektrisch leitend mit dem dritten Haupt-Wicklungsanschluss 25 verbunden, und der vierte Hilfs-Wicklungsanschluss 27 ist über ein viertes elektrisches Schaltmittel SM₄ mit dem ersten Netzteil-Ausgangspol C verbunden, um einen vierten, zum dritten Fügespannungspfad P3 parallelen Fügespannungspfad P4 zwischen dem dritten Haupt-Wicklungsanschluss und dem ersten Netzteil-Ausgangspol C zu erzeugen. Wie das erste und zweite Schaltmittel SM₁, SM₂ sind im in Fig.3 gezeigten Fall zusätzlich auch das dritte Schaltmittel SM₃ und das vierte Schaltmittel SM₄ ausgestaltet, in Abhängigkeit des vorstehen beschriebenen Betriebszustandes des Netzteils 1 entweder den zweiten oder den vierten Fügespannungspfad P₂, P₄ in einen elektrisch leitenden Zustand zu versetzen und damit zu aktivieren, zusätzlich zum ersten oder dritten Fügespannungspfad P₁, P₃. Die Verwendung einer weiteren Hilfs-Sekundärwicklung L_{2N2} erlaubt die Bereitstellung eines energieeffizienteren Schaltnetzteils 1, da insbesondere auf die in Fig.3 gezeigte Weise der gesamte im Transformator T auftretende magnetische Fluss genutzt werden kann. Bevorzugt sind stets der erste und zweite Fügespannungspfad P₁, P₂ gleichzeitig leitend oder nicht-leitend, und es sind stets der dritte und vierte Fügespannungspfad P₃, P₄ gleichzeitig leitend oder nicht-leitend.

In einer bevorzugten Weise kann die Haupt-Sekundärwicklung L_{2H} in der Ausführung gemäß Fig.3 zwischen dem ersten Haupt-Wicklungsanschluss 21 und der Mittelpunktanzapfung 22 eine erste Teilwicklung mit Windungszahl 1 aufweisen und zwischen der Mittelpunktanzapfung 22 und dem zweiten Haupt-Wicklungsanschluss 25 eine zweite Teilwicklung mit Windungszahl 1 aufweisen, um, wie zuvor, auch in dieser Ausführungsform auf die bei Netzteilen 1 übliche, sekundärseitige Windungszahl von 1 zurückzugreifen.

Wie die genannten Schaltmittel SM₁, SM₂, SM₃, SM₄ umgesetzt werden können, ist in Fig.4 gezeigt, anhand einer konkreten Implementierung des Netzteils 1 aus Fig.3. Wie in Fig.4 erkennbar ist, können das erste elektrische Schaltmittel SM₁ und das dritte elektrische Schaltmittel SM₃ in einer vorteilhaften Weise als Diode ausgeführt sein, und/oder das zweite elektrische Schaltmittel SM₂ und das elektrische Schaltmittel SM₄ kann als Serienschaltung eines Strombegrenzungsmittels L_{R1} bzw. L_{R2} und einer Diode ausgeführt sein. Anstelle der gezeigten Dioden können aber ebenso steuerbare Halbleiterschalter eingesetzt werden, die je nach Betriebszustand des Schaltnetzteils 1 geschlossen oder geöffnet werden können. Die Strombegrenzungsmittel L_{R1}, L_{R2} können in einer bevorzugten Weise als Strombegrenzungsdrossel oder als Luftspule ausgeführt werden. Gerade die Verwendung von steuerbaren Halbleiterschaltern ermöglicht eine gezielte Aktivierung / Deaktivierung von Fügespannungspfaden. In den Fügespannungspfaden können auch veränderliche ohmsche Widerstände vorgesehen werden, z.B. elektronische Potentiometer, oder Thyristoren, um eine präzise Begrenzung ausgewählter Fügespannungspfade umsetzen zu können.

Zu der in Fig.4 gezeigten Ausgestaltung der Schaltmittel mit rein passiven Bauelementen ist anzumerken, dass sich das betriebszustandsselektive Aktivieren der Spannungspfade ganz von selbst ergibt. Bei Betriebspunkten mit geringer Last, d.h. insbesondere im Leerlauf, wo kein Strom fließt, ist die Impedanz der als Drossel ausgeführten Strombegrenzungsmittel L_{R} vernachlässigbar. Das bedeutet, die Summe der Spannungen an Haupt-Sekundärwicklung L_{2H} und Hilfs-Sekundärwicklung L_{2N1} liegt am ersten Netzteil-Ausgangspol C an, sodass die Diode SM1 des ersten Schaltmittels S_{M1} sperrt. Gleiches gilt für die zweite Hilfs-Sekundärwicklung L_{2N2} und Schaltmittel SM2. Steigt der fließende Strom I_{S}, vergrößert sich der Spannungsabfall über die Impedanz des als Drossel ausgeführten Strombegrenzungsmittel L_{R}, sodass das am ersten Netzteil-Ausgangspol C anliegende Potential bei ausreichend großer Belastung auf jenes Potential des ersten Haupt-Wicklungsanschlusses 21 zu liegen kommt. Das hat zur Folge, dass der durch das zweite Schaltmittel SM2 und damit den zweiten Fügespannungspfad P₂ fließende Strom auf einen Wert I₂=Ix begrenzt wird und das este Schaltmittel SM1 einen Strom I₁=Is-Ix übernimmt, der gemeinsam mit dem Strom I₂ des zweiten Fügespannungspfades P₂ dem Fügestrom entspricht. Bei der Ausführung nach Fig.4 stellt sich von selbst ein dynamisches Gleichgewicht ein. Würde der Strom I₂ weiter sinken, würde die effektive Impedanz der Strombegrenzungsdrosseln L_{R1} sinken, was ein erneutes Erhöhen der des Stromes zur Folge hätte. Es ist folglich ein besonderer Vorteil der Erfindung, dass bei der Ausführung gemäß Fig.4 nicht einmal eine Steuereinheit vonnöten ist. Das Verhalten wird lediglich durch die Dimensionierung der Bauteile bestimmt.

Auch ist anzumerken, dass die gezeigten Strombegrenzungsdrosseln L_{R1}, L_{R2} auch als zwei Wicklungen eines weiteren Transformators ausgeführt sein können, und dass ebenso der zweite Haupt-Wicklungsanschluss 22 auf verschiedene Weisen mit dem zweiten Netzteil-Ausgangspol D verbunden sein kann, z.B. durch eine direkte, elektrisch leitende Verbindung mit einem einfachen elektrischen Leiter, oder wie in Fig.4 gezeigt mittels einer Drossel. Die Schaltmittel SM₁, ..., SM₄ übernehmen in den gezeigten Ausführungsvarianten die Funktion eines sekundärseitigen Gleichrichters G₂.

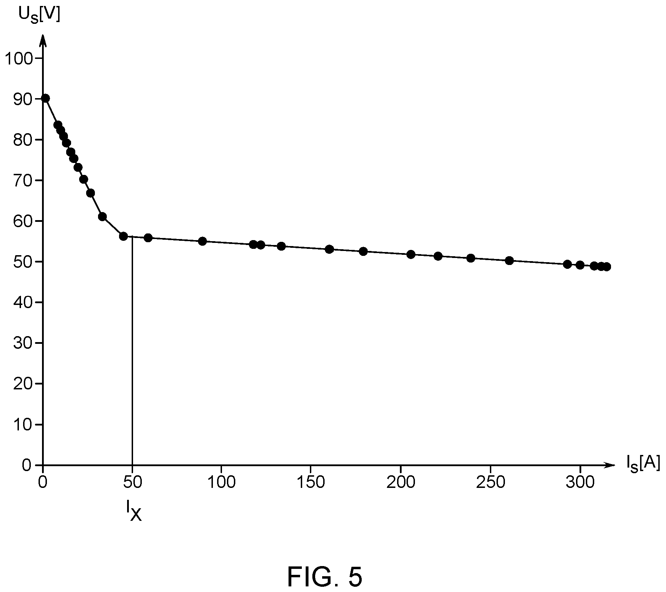

Fig.5 zeigt abschließend eine mit einem erfindungsgemäßen Netzteil 1 nach Fig.4 erreichbare Strom-Spannungs-Kennlinie. Es ist erkennbar, dass die Strombegrenzungsdrosseln L_{R1}, L_{R2} konstruktiv derart gewählt sind, dass ab einem Fügestrom von Ix=50A die zusätzliche Wirkung der Hilfs-Sekundärwicklung einbricht, und sich die Fügespannung U_{S} auf jenen Wert einstellt, der sich auch ohne Hilfs-Sekundärwicklung ergeben würde.

## Patentansprüche

1. Netzteil (1) zur Bereitstellung einer zwischen einem ersten Netzteil-Ausgangspol (C) und einem zweiten Netzteil-Ausgangspol (D) abfallenden Fügespannung (U_{S}) für die Durchführung eines Lichtbogenfügeverfahrens, wobei ein Transformator (T) mit einem zumindest dreischenkeligen magnetischen Kern vorgesehen ist, aufweisend einen Hauptschenkel (S_{H}), zumindest zwei Nebenschenkel (S_{N1}, S_{N2}), eine Primärwicklung (L1) zur Aufnahme einer an einem Netzteil-Eingangspolpaar (A, B) des Netzteils (1) anliegenden Primär-Wechselspannung (U₁), eine Haupt-Sekundärwicklung (L_{2H}) mit einem ersten Haupt-Wicklungsanschluss (21) und einem zweiten Haupt-Wicklungsanschluss (22), und zumindest eine Hilfs-Sekundärwicklung (L_{2N1}) mit einem ersten Hilfs-Wicklungsanschluss (23) und einem zweiten Hilfs-Wicklungsanschluss (24), wobei die Primärwicklung (L₁) und die Haupt-Sekundärwicklung (L_{2H}) um den Hauptschenkel (S_{H}) gewickelt sind und die zumindest eine Hilfs-Sekundärwicklung (L_{2N1}) um einen der zumindest zwei Nebenschenkel (S_{N1}) gewickelt ist, **dadurch gekennzeichnet, dass**
- der erste Haupt-Wicklungsanschluss (21) über ein erstes elektrisches Schaltmittel (SM₁) mit dem ersten Netzteil-Ausgangspol (C) elektrisch verbunden ist, um einen ersten Fügespannungspfad (P₁) zwischen dem ersten Haupt-Wicklungsanschluss (21) und dem ersten Netzteil-Ausgangspol (C) zu erzeugen,
- der zweite Haupt-Wicklungsanschluss (22) mit dem zweiten Netzteil-Ausgangspol (D) elektrisch verbunden ist,
- der erste Hilfs-Wicklungsanschluss (23) über ein zweites elektrisches Schaltmittel (SM₂) mit dem ersten Netzteil-Ausgangspol (C) verbunden ist, und der zweite Hilfs-Wicklungsanschluss (24) elektrisch leitend mit dem ersten Haupt-Wicklungsanschluss (21) verbunden ist, um einen zweiten, zum ersten Fügespannungspfad (P₁) parallelen Fügespannungspfad (P₂) zwischen dem ersten Haupt-Wicklungsanschluss (21) und dem ersten Netzteil-Ausgangspol (C) zu erzeugen,
wobei das erste Schaltmittel (SM₁) und das zweite Schaltmittel (SM₂) ausgestaltet sind, in Abhängigkeit eines Betriebszustandes des Netzteils (1) den ersten Fügespannungspfad (P₁) oder den zweiten Fügespannungspfad (P₂) oder gleichzeitig den ersten Fügespannungspfad (P₁) und den zweiten Fügespannungspfad (P₂) in einen elektrisch leitenden Zustand zu versetzen und damit zu aktivieren, um die von der Primärwicklung (L₁) aufgenommene Primär-Wechselspannung (U₁) in die Fügespannung (Uₛ) zu wandeln, wobei die Haupt-Sekundärwicklung (L_{2H}) als Wicklung mit Mittelpunktanzapfung oder als Serienschaltung von zwei Wicklungen ausgeführt ist, neben dem ersten Haupt-Wicklungsanschluss (21) und dem zweiten Haupt-Wicklungsanschluss (22) aufweisend einen dritten Haupt-Wicklungsanschluss (25), wobei der zweite Haupt-Wicklungsanschluss (22) der Mittelpunktanzapfung entspricht und wobei eine zweite, um einen zweiten der zumindest zwei Nebenschenkel (S_{N2}) gewickelte Hilfs-Sekundärwicklung (L_{2N2}) mit einem dritten Hilfs-Wicklungsanschluss (26) und einem vierten Hilfs-Wicklungsanschluss (27) vorgesehen ist, wobei
- der dritte Haupt-Wicklungsanschluss (25) über ein drittes elektrisches Schaltmittel (SM₃) mit dem ersten Netzteil-Ausgangspol (C) verbunden ist, um einen dritten Fügespannungspfad (P3) zwischen dem dritten Haupt-Wicklungsanschluss (25) und dem ersten Netzteil-Ausgangspol (C) zu erzeugen,
- der dritte Hilfs-Wicklungsanschluss (26) elektrisch leitend mit dem dritten Haupt-Wicklungsanschluss (25) verbunden ist und der vierte Hilfs-Wicklungsanschluss (27) über ein viertes elektrisches Schaltmittel (SM₄) mit dem ersten Netzteil-Ausgangspol (C) verbunden ist, um einen vierten, zum dritten Fügespannungspfad (P3) parallelen Fügespannungspfad (P4) zwischen dem dritten Haupt-Wicklungsanschluss (26) und dem ersten Netzteil-Ausgangspol (C) zu erzeugen,
- das dritte Schaltmittel (SM₃) und das vierte Schaltmittel (SM₄) ausgestaltet sind, in Abhängigkeit des Betriebszustandes des Netzteils (1) entweder den dritten und/oder den vierten Fügespannungspfad (P₃, P₄) in einen elektrisch leitenden Zustand zu versetzen und damit zu aktivieren.

2. Netzteil (1) nach Anspruch 1, **dadurch gekennzeichnet, dass** das erste Schaltmittel (SM₁) und das zweite Schaltmittel (SM₂) ausgestaltet sind, den ersten Fügespannungspfad (P1) zu aktivieren, und/oder den zweiten Fügespannungspfad (P2) zu deaktivieren oder zu begrenzen, wenn ein über den ersten Netzteil-Ausgangspol (C) fließender Ausgangstrom (I_{S}) einen vorgegebenen Schwellwert (Ix) überschreitet, **und dass** das erste Schaltmittel (SM₁) und das zweite Schaltmittel (SM₁) ausgestaltet sind, den ersten Fügespannungspfad (P₁) zu aktivieren und/oder den zweiten Fügespannungspfad (P₂) zu aktivieren, wenn der über den ersten Netzteil-Ausgangspol (C) fließende Ausgangstrom (I_{S}) den vorgegebenen Schwellwert (Iₓ) unterschreitet.

3. Netzteil (1) nach einem der vorhergehenden Ansprüche, **dadurch gekennzeichnet, dass** das erste elektrische Schaltmittel (SM₁) als Diode oder als steuerbarer Halbleiterschalter, beispielsweise als Transistor oder Thyristor, ausgeführt ist.

4. Netzteil (1) nach einem der vorhergehenden Ansprüche, **dadurch gekennzeichnet, dass** das zweite elektrische Schaltmittel (SM₂) als Serienschaltung eines Strombegrenzungsmittels (L_{R1}) und einer Diode oder als steuerbarer Halbleiterschalter ausgeführt ist.

5. Netzteil (1) nach Anspruch 4, **dadurch gekennzeichnet, dass** das Strombegrenzungsmittel (L_{R1}) als Strombegrenzungsdrossel oder als Luftspule ausgeführt ist.

6. Netzteil (1) nach einem der vorhergehenden Ansprüche, **dadurch gekennzeichnet, dass** jener zumindest eine Nebenschenkel (S_{N1}), um den die zumindest eine Hilfs-Sekundärwicklung (L_{2N1}) gewickelt ist, einen Nebenschenkel-Querschnitt (Q_{N1}) aufweist, **und dass** das Verhältnis dieses Nebenschenkel-Querschnitts (Q_{N1}) zu einer Summe von Querschnitten von im Transformator (T) vorgesehenen Nebenschenkeln einen Spannungs-Erhöhungsfaktor k = 1+(Q_{N1}/ΣQ_{Nx}) beschreibt.

7. Netzteil (1) nach Anspruch 6, **dadurch gekennzeichnet, dass** der Spannungs-Erhöhungsfaktor k einem Faktor größer als 1 und kleiner als 2, vorzugsweise größer als 1 und kleiner als 1,75, vorzugsweise größer als 1 und kleiner als 1,6, vorzugsweise 1,5 entspricht.

8. Netzteil (1) nach einem der vorhergehenden Ansprüche, **dadurch gekennzeichnet, dass** die Haupt-Sekundärwicklung (L_{2H}) eine Windungszahl von 1 aufweist.

9. Netzteil (1) nach einem der vorhergehenden Ansprüche, **dadurch gekennzeichnet, dass** die Hilfs-Sekundärwicklung (L_{2N1}) eine Windungszahl von 1 aufweist.

10. Netzteil (1) nach einem der vorhergehenden Ansprüche, **dadurch gekennzeichnet, dass** die Primärwicklung (L₁) eine Windungszahl von 2 oder höher aufweist.

11. Netzteil (1) nach Anspruch 1, **dadurch gekennzeichnet, dass** die die Haupt-Sekundärwicklung (L_{2H}) zwischen dem ersten Haupt-Wicklungsanschluss (21) und der Mittelpunktanzapfung (22) eine erste Teilwicklung mit Windungszahl 1 aufweist und zwischen der Mittelpunktanzapfung (22) und dem zweiten Haupt-Wicklungsanschluss (25) eine zweite Teilwicklung mit Windungszahl 1 aufweist.

12. Netzteil (1) nach einem der vorhergehenden Ansprüche, **dadurch gekennzeichnet, dass** zumindest ein Nebenschenkel (SN1, SN2) des Transformators vorgesehen ist, um den keine Wicklung gewickelt ist.

13. Anordnung aus einem Netzteil (1) nach einem der vorhergehenden Ansprüche, einem primärseitigen Gleichrichter (G1) zum Gleichrichten einer elektrischen Netzspannung (U_{N}) in eine primärseitige Zwischenkreisspannung (U_{ZK}) und einem mit einer vorgegebenen Schaltfrequenz betriebenen, primärseitigen Wechselrichter (WR) zum Wechselrichten der Zwischenkreisspannung (U_{ZK}) in die am Netzteil-Eingangspolpaar (A, B) anliegende Primär-Wechselspannung (U₁).

## Claims

1. Power supply (1) for providing a joining voltage (Uₛ) that drops between a first power supply output pole (C) and a second power supply output pole (D) for carrying out an arc joining process, a transformer (T) having an at least three-limbed magnetic core being provided, the transformer (T) having a main limb (S_{H}), at least two secondary limbs (S_{N1}, S_{N2}), a primary winding (L1) for receiving a primary AC voltage (U₁) applied to a power supply input pole pair (A, B) of the power supply (1), a main secondary winding (L_{2H}) with a first main winding connection (21) and a second main winding connection (22), and at least one auxiliary secondary winding (L_{2N1}) with a first auxiliary winding connection (23) and a second auxiliary winding connection (24), the primary winding (L₁) and the main secondary winding (L_{2H}) being wound around the main limb (S_{H}) and the at least one auxiliary secondary winding (L_{2N1}) being wound around one of the at least two secondary limbs (S_{N1}), **characterized in that**
- the first main winding connection (21) is electrically connected via a first electrical switching device (SM₁) to the first power supply output pole (C) in order to create a first joining voltage path (P₁) between the first main winding connection (21) and the first power supply output pole (C),
- the second main winding connection (22) is electrically connected to the second power supply output pole (D),
- the first auxiliary winding connection (23) is connected via a second electrical switching device (SM₂) to the first power supply output pole (C), and the second auxiliary winding connection (24) is electrically conductively connected to the first main winding connection (21) in order to create a second joining voltage path (P₂) that is parallel to the first joining voltage path (P₁), between the first main winding connection (21) and the first power supply output pole (C),
the first switching device (SM₁) and the second switching device (SM₂) being designed to, depending on an operating state of the power supply (1), set the first joining voltage path (P₁) or the second joining voltage path (P₂) or simultaneously the first joining voltage path (P₁) and the second joining voltage path (P₂) into an electrically conductive state and thus activate it, in order to convert the primary AC voltage (U₁) into the joining voltage (Uₛ),
the main secondary winding (L_{2H}) being designed as a winding with a center tap or as a series connection of two windings, in addition to the first main winding connection (21) and the second main winding connection (22) having a third main winding connection (25), the second main winding connection (22) corresponding to the center tap, and a second auxiliary secondary winding (L_{2N2}) wound around a second of the at least two secondary limbs (S_{N2}) with a third auxiliary winding connection (26) and a fourth auxiliary winding connection (27) being provided,
- the third main winding connection (25) being connected via a third electrical switching device (SM₃) to the first power supply output pole (C), in order to generate a third joining voltage path (P3) between the third main winding connection (25) and the first power supply output pole (C),
- the third auxiliary winding connection (26) being electrically conductively connected to the third main winding connection (25), and the fourth auxiliary winding connection (27) being connected via a fourth electrical switching device (SM₄) to the first power supply output pole (C), in order to create a fourth joining voltage path (P4), parallel to the third joining voltage path (P3), between the third main winding connection (26) and the first power supply output pole (C),
- the third switching device (SM₃) and the fourth switching device (SM₄) being designed to, depending on the operating state of the power supply (1), set either the third and/or the fourth joining voltage path (P₃, P₄) into an electrically conductive state and thus activate it.

2. Power supply (1) according to claim 1, **characterized in that** the first switching device (SM₁) and the second switching device (SM₂) are designed to activate the first joining voltage path (P1) and/or to deactivate or limit the second joining voltage path (P2) when an output current (I_{S}) flowing through the first power supply output pole (C) exceeds a predefined threshold (Ix), **and in that** the first switching device (SM₁) and the second switching device (SM₁) are designed to activate the first joining voltage path (P₁) and/or to activate the second joining voltage path (P₂) when the output current (I_{S}) flowing through the first power supply output pole (C) falls below the predefined threshold (Iₓ).

3. Power supply (1) according to any one of the preceding claims, **characterized in that** the first electrical switching device (SM₁) is implemented as a diode or as a controllable semiconductor switch, for example as a transistor or thyristor.

4. Power supply (1) according to any one of the preceding claims, **characterized in that** the second electrical switching device (SM₂) is implemented as a series connection of a current limiting device (L_{R1}) and a diode or is implemented as a controllable semiconductor switch.

5. Power supply (1) according to claim 4, **characterized in that** the current limiting device (L_{R1}) is implemented as a current-limiting throttle or as an air coil.

6. Power supply (1) according to any one of the preceding claims, **characterized in that** the at least one secondary limb (S_{N1}) around which the at least one auxiliary secondary winding (L_{2N1}) is wound has a secondary limb cross-section (Q_{N1}) **and in that** the ratio of this secondary limb cross-section (Q_{N1}) to a sum of cross-sections of secondary limbs provided in the transformer (T) describes a voltage increase factor k = 1+(Q_{N1}/ΣQ_{Nx}).

7. Power supply (1) according to claim 6, **characterized in that** the voltage increase factor k corresponds to a factor greater than 1 and less than 2, preferably greater than 1 and less than 1.75, preferably greater than 1 and less than 1.6, preferably 1.5.

8. Power supply (1) according to any one of the preceding claims, **characterized in that** the main secondary winding (L_{2H}) has a number of turns of 1.

9. Power supply (1) according to any one of the preceding claims, **characterized in that** the auxiliary secondary winding (L_{2N1}) has a number of turns of 1.

10. Power supply (1) according to any one of the preceding claims, **characterized in that** the primary winding (L₁) has a number of turns of 2 or more.

11. Power supply (1) according to claim 1, **characterized in that** the main secondary winding (L_{2H}) has a first partial winding with a number of turns 1 between the first main winding connection (21) and the center tap (22), and has a second partial winding with a number of turns 1 between the center tap (22) and the second main winding connection (25).

12. Power supply (1) according to any one of the preceding claims, **characterized in that** at least one secondary limb (SN1, SN2) of the transformer is provided, around which no winding is wound.

13. Arrangement comprising a power supply (1) according to any one of the preceding claims, a primary-side rectifier (G1) for rectifying an electrical mains voltage (U_{N}) into a primary-side DC link voltage (U_{ZK}), and a primary-side inverter (WR) operated at a predetermined switching frequency for converting the DC link voltage (U_{ZK}) into the primary AC voltage (U₁) applied to the power supply input pole pair (A, B).

## Revendications

1. Alimentation électrique (1) destinée à fournir une tension d'assemblage (Uₛ) chutant entre un premier pôle de sortie d'alimentation électrique (C) et un second pôle de sortie d'alimentation électrique (D) pour la mise en œuvre d'un procédé d'assemblage par arc électrique, dans laquelle un transformateur (T) comportant un noyau magnétique à au moins trois branches est prévu, présentant une branche principale (S_{H}), au moins deux branches secondaires (S_{N1}, S_{N2}), un enroulement primaire (L1) destiné à recevoir une tension alternative primaire (U₁) appliquée à une paire de pôles d'entrée d'alimentation électrique (A, B) de l'alimentation électrique (1), un enroulement secondaire principal (L_{2H}) comportant une première borne d'enroulement principal (21) et une seconde borne d'enroulement principal (22), et au moins un enroulement secondaire auxiliaire (L_{2N1}) comportant une première borne d'enroulement auxiliaire (23) et une seconde borne d'enroulement auxiliaire (24), dans laquelle l'enroulement primaire (L₁) et l'enroulement secondaire principal (L_{2H}) sont enroulés autour de la branche principale (S_{H}) et l'au moins un enroulement secondaire auxiliaire (L_{2N1}) est enroulé autour de l'une des au moins deux branches secondaires (S_{N1}), **caractérisée en ce que**
- la première borne d'enroulement principal (21) est connectée électriquement au premier pôle de sortie d'alimentation (C) électrique par l'intermédiaire d'un premier moyen de commutation électrique (SM₁) afin de créer un premier chemin de tension d'assemblage (P₁) entre la première borne d'enroulement principal (21) et le premier pôle de sortie d'alimentation électrique (C),
- la deuxième borne d'enroulement principal (22) est connectée électriquement au second pôle de sortie d'alimentation électrique (D),
- la première borne d'enroulement auxiliaire (23) est connectée au premier pôle de sortie d'alimentation électrique (C) par l'intermédiaire d'un deuxième moyen de commutation (SM₂) électrique, et la seconde borne d'enroulement auxiliaire (24) est connectée de manière électriquement conductrice à la première borne d'enroulement principal (21) afin de créer un deuxième chemin de tension d'assemblage (P₂) parallèle au premier chemin de tension d'assemblage (P₁) entre la première borne d'enroulement principal (21) et le premier pôle de sortie d'alimentation électrique (C),
dans laquelle le premier moyen de commutation (SM₁) et le deuxième moyen de commutation (SM₂) sont configurés pour, en fonction d'un état de fonctionnement de l'alimentation électrique (1), faire passer le premier chemin de tension d'assemblage (P₁) ou le deuxième chemin de tension d'assemblage (P₂), ou simultanément le premier chemin de tension d'assemblage (P₁) et le deuxième chemin de tension d'assemblage (P₂), dans un état électriquement conducteur et pour ainsi les activer, afin de convertir la tension alternative primaire (U₁) reçue par l'enroulement primaire (L₁) en tension d'assemblage (Uₛ), dans laquelle l'enroulement secondaire principal (L_{2H}) est configuré sous la forme d'un enroulement à prise médiane ou d'un montage en série de deux enroulements, présentant, outre la première borne d'enroulement principal (21) et la deuxième borne d'enroulement principal (22), une troisième borne d'enroulement principal (25), dans laquelle la deuxième borne d'enroulement principal (22) correspond à la prise médiane, et dans laquelle est prévu un deuxième enroulement secondaire auxiliaire (L_{2N2}) enroulé autour d'une seconde des au moins deux branches secondaires (S_{N2}) et comportant une troisième borne d'enroulement auxiliaire (26) et une quatrième borne d'enroulement auxiliaire (27), dans laquelle
- la troisième borne d'enroulement principal (25) est connectée au premier pôle de sortie d'alimentation électrique (C) par l'intermédiaire d'un troisième moyen de commutation (SM₃) électrique afin de créer un troisième chemin de tension d'assemblage (P3) entre la troisième borne d'enroulement principal (25) et le premier pôle de sortie d'alimentation électrique (C),
- la troisième borne d'enroulement auxiliaire (26) est connectée de manière électriquement conductrice à la troisième borne d'enroulement principal (25) et la quatrième borne d'enroulement auxiliaire (27) est connectée au premier pôle de sortie d'alimentation électrique (C) par l'intermédiaire d'un quatrième moyen de commutation (SM₄) électrique, afin de créer un quatrième chemin de tension d'assemblage (P4) parallèle au troisième chemin de tension d'assemblage (P3) entre la troisième borne d'enroulement principal (26) et le premier pôle de sortie d'alimentation électrique (C),
- le troisième moyen de commutation (SM₃) et le quatrième moyen de commutation (SM₄) sont configurés pour, en fonction de l'état de fonctionnement de l'alimentation électrique (1), faire passer le troisième et/ou le quatrième chemin de tension d'assemblage (P₃, P₄) dans un état électriquement conducteur et pour ainsi les activer.

2. Alimentation électrique (1) selon la revendication 1, **caractérisée en ce que** le premier moyen de commutation (SM₁) et le deuxième moyen de commutation (SM₂) sont configurés pour activer le premier chemin de tension d'assemblage (P1), et/ou pour désactiver ou limiter le deuxième chemin de tension d'assemblage (P2) lorsqu'un courant de sortie (lₛ) circulant par l'intermédiaire du premier pôle de sortie d'alimentation électrique (C) dépasse une valeur seuil (Ix) prédéfinie, **et en ce que** le premier moyen de commutation (SM₁) et le deuxième moyen de commutation (SM₂) sont configurés pour activer le premier chemin de tension d'assemblage (P₁) et/ou pour activer le deuxième chemin de tension d'assemblage (P₂) lorsque le courant de sortie (lₛ) circulant par l'intermédiaire du premier pôle de sortie d'alimentation électrique (C) passe en dessous de la valeur seuil (Iₓ) prédéfinie.

3. Alimentation électrique (1) selon l'une des revendications précédentes, **caractérisée en ce que** le premier moyen de commutation (SM₁) électrique est configuré sous la forme d'une diode ou d'un commutateur à semi-conducteur pouvant être commandé, par exemple un transistor ou un thyristor.

4. Alimentation électrique (1) selon l'une des revendications précédentes, **caractérisée en ce que** le deuxième moyen de commutation (SM₂) électrique est configuré sous la forme d'un montage en série d'un moyen de limitation de courant (L_{R1}) et d'une diode ou sous la forme d'un commutateur à semi-conducteur pouvant être commandé.

5. Alimentation électrique (1) selon la revendication 4,
**caractérisée en ce que** le moyen de limitation de courant (L_{R1}) est configuré sous la forme d'une bobine de limitation de courant ou d'une bobine à air.

6. Alimentation électrique (1) selon l'une des revendications précédentes, **caractérisée en ce que** l'au moins une branche secondaire (S_{N1}), autour de laquelle est enroulé l'au moins un enroulement secondaire auxiliaire (L_{2N1}), présente une section transversale de branche secondaire (Q_{N1}), **et en ce que** le rapport entre ladite section transversale de branche secondaire (Q_{N1}) et une somme de sections transversales de branches secondaires prévues dans le transformateur (T) définit un facteur d'élévation de tension k = 1 + (Q_{N1}/ΣQ_{NX}).

7. Alimentation électrique (1) selon la revendication 6,
**caractérisée en ce que** le facteur d'élévation de tension k correspond à un facteur supérieur à 1 et inférieur à 2, de préférence supérieur à 1 et inférieur à 1,75, de préférence supérieur à 1 et inférieur à 1,6, de préférence égal à 1,5.

8. Alimentation électrique (1) selon l'une des revendications précédentes, **caractérisée en ce que** l'enroulement secondaire principal (L_{2H}) présente un nombre de spires égal à 1.

9. Alimentation électrique (1) selon l'une des revendications précédentes, **caractérisée en ce que** l'enroulement secondaire auxiliaire (L_{2N1}) présente un nombre de spires égal à 1.

10. Alimentation électrique (1) selon l'une des revendications précédentes, **caractérisée en ce que** l'enroulement primaire (L₁) présente un nombre de spires égal ou supérieur à 2.

11. Alimentation électrique (1) selon la revendication 1,
**caractérisée en ce que** l'enroulement secondaire principal (L_{2H}) présente, entre la première borne d'enroulement principal (21) et la prise médiane (22), un premier enroulement partiel comportant un nombre de spires égal à 1 et, entre la prise médiane (22) et la deuxième borne d'enroulement principal (25), un second enroulement partiel comportant un nombre de spires égal à 1.

12. Alimentation électrique (1) selon l'une des revendications précédentes, **caractérisée en ce qu'**au moins une branche secondaire (SN1, SN2) du transformateur est prévue, autour de laquelle n'est enroulé aucun enroulement.

13. Agencement constitué d'une alimentation électrique (1) selon l'une des revendications précédentes, d'un redresseur (G1) côté primaire permettant de redresser une tension d'alimentation électrique (U_{N}) en une tension de circuit secondaire (U_{ZK}) COTE PRIMAIRE, et d'un onduleur (WR) côté primaire fonctionnant à une fréquence de commutation prédéfinie et permettant de convertir la tension de circuit secondaire (U_{ZK}) en tension alternative primaire (U₁) appliquée à la paire de pôles d'entrée d'alimentation électrique (A, B).
